Europäisches Patentamt

European Patent Office

Office européen des brevets

(11) Veröffentlichungsnummer: **0 157 177 B1**

(12) **EUROPÄISCHE PATENTSCHRIFT**

(45) Veröffentlichungstag der Patentschrift: 29.08.90

(51) Int. Cl.⁵: **G 01 D 5/36**

(21) Anmeldenummer: 85102216.0

(22) Anmeldetag: 28.02.85

(54) Positionsmesseinrichtung.

(30) Priorität: 31.03.84 DE 3412128

(43) Veröffentlichungstag der Anmeldung:
09.10.85 Patentblatt 85/41

(45) Bekanntmachung des Hinweises auf die
Patenterteilung:
29.08.90 Patentblatt 90/35

(84) Benannte Vertragsstaaten:
AT CH DE FR GB IT LI NL SE

(56) Entgegenhaltungen:
EP-A-0 083 689
EP-A-0 194 611
GB-A-2 024 416
US-A-3 427 463

Die Akte enthält technische Angaben, die nach
dem Eingang der Anmeldung eingereicht
wurden und die nicht in dieser Patentschrift
enthalten sind.

(73) Patentinhaber: Dr. Johannes Heidenhain GmbH
Dr.-Johannes-Heidenhain-Strasse 5 Postfach
1260
D-8225 Traunreut (DE)

(72) Erfinder: Ernst, Alfons, Dipl.-Ing
Traunring 62
D-8225 Traunreut (DE)

Courier Press, Leamington Spa, England.

# EP 0 157 177 B1

## Beschreibung

Die Erfindung betrifft eine Positionsmeßeinrichtung gemäß dem Oberbegriff des Anspruches 1.

Bei einer lichtelektrischen Meßeinrichtung zur Messung der Relativlage zweier Objekte, beispielsweise der Relativlage eines Schlittens bezüglich des Betts einer Werkzeugmaschine, wird die Teilung eines Teilungsträgers, der mit dem einen Objekt verbunden ist, von einer mit dem anderen Objekt verbundenen Abtasteinheit abgetastet. Die Abtasteinheit weist zu diesem Zweck eine Beleuchtungseinrichtung, eine Abtastplatte mit beispielsweise zwei Abtastfeldern, deren Teilungen um ein Viertel der Teilungsperiode der Teilung des Teilungsträgers zueinander versetzt sind und mit der Teilung des Teilungsträgers exakt übereinstimmen, sowie zwei Photoelemente auf, die jeweils einem Abtastfeld zugeordnet sind. Die gleichartigen Teilungen der Abtastplatte und des Teilungsträgers bestehen beim Durchlichtmeßverfahren aus lichtdurchlässigen und lichtundurchlässigen Streifen mit einer Längserstreckung quer zur Meßrichtung, die in Meßrichtung (Längserstreckung des Teilungsträgers) alternierend aufeinander folgen. Der Lichtstrom der Beleuchtungseinrichtung, der die Teilungen des Teilungsträgers und der Abtastplatte durchsetzt und anschließend auf die beiden Photoelemente fällt, wird bei der Relativbewegung der beiden Objekte an den Teilungen moduliert, so daß die beiden jeweils einem Abtastfeld zugeordneten Photoelemente zwei periodische, um 90° zueinander phasenversetzte Analogsignale liefern. Diese sinsuförmigen Analogsignale werden einer Auswerteeinrichtung zur Bildung von Positionsmeßwerten zugeführt. Der Phasenversatz zwischen den beiden Analogsignalen erlaubt die Diskriminierung der Meßrichtung und eine Interpolation der Teilung.

Die Periode der gewonnenen Analogsignale wird durch die Teilungsperiode oder die Gitterkonstante der Teilung des Teilungsträgers bestimmt. Die Teilungsperiode wird durch die Breiten eines lichtdurchlässigen und eines lichtundurchlässigen Streifens in Meßrichtung gebildet. Bei der Relativbewegung zwischen der Abtasteinheit und der Teilung des Teilungsträgers wird jede abgetastete Teilungsperiode durch einen Zählimpuls erfaßt und als Positionsmeßwert angezeigt.

Die aus der Teilung des Teilungsträgers bei der Abtastung gewonnenen periodischen Analogsignale weisen im allgemeinen keinen reinen sinusförmigen Verlauf auf, sondern sind beispielsweise infolge von Ungenauigkeiten der Teilungen und infolge von Abstandsschwankungen zwischen der Teilungsfläche der Abtastplatte und der Teilungsfläche des Teilungsträgers bei der Abtastung oberwellenbehaftet. Diese Ungenauigkeiten der Teilungen werden zum Beispiel durch unterschiedliche Abstände der lichtdurchlässigen und lichtundurchlässigen Streifen oder durch eine Kantenunschärfe dieser Streifen hervorgerufen. Um die gewonnenen Analogsignale weitgehend oberwellenfrei zu halten, müssen hohe Anforderungen an die Genauigkeit der Teilungen sowie an die Einhaltung eines optimalen Abstandes zwischen den Teilungsflächen der Abtastplatte und des Teilungsträgers bei der Abtastung gestellt werden. Zur Bildung von genauen Positionsmeßwerten für jede Teilungsperiode und zur exakten Unterteilung der Teilungsperioden durch Bildung von Interpolationswerten zur weiteren Erhöhung der Meßgenauigkeit muß das aus dieser Teilung gewonnene Analogsignal oberwellenfrei sein; die Bildung von Interpolationswerten beispielsweise mittels eines Rechners ist in der DE—OS 27 29 697 beschrieben.

Meßeinrichtungen mit relativ großen Gitterkonstanten (z.B. 0,1 mm) liefern häufig dreieckförmige oder trapezförmige Analogsignale, die naturgemäß stets oberwellenbehaftet sind.

Aus der DE—PS 19 41 731 ist eine lichtelektrische Längenmeßeinrichtung bekannt, bei der zur Gewinnung eines oberwellenfreien Analogsignals bei der Abtastung der Teilung eines Teilungsträgers eine Frequenzfilterblende mit einem sinusförmigen Durchlässikeitsverlauf vorgesehen ist. Diese Meßeinrichtung weist den Nachteil auf, daß eine spezielle Frequenzfilterblende hergestellt und eingebaut werden muß. Das Feld dieser Frequenzfilterblende muß vollständig durchleuchtet und abgetastet werden, was insbesondere bei einer Abtastung im Reflexionsmeßverfahren praktisch nicht durchführbar ist; zu dem entsteht durch die Sinuskontur der Frequenzfilterblende ein beträchtlicher Lichtstromverlust.

Der Erfindung liegt die Aufgabe zugrunde, eine Gewinnung oberwellenfreier periodischer Signale bei einer Positionsmeßeinrichtung anzugeben, die zu diesem Zweck keiner speziellen Elemente bedarf und universell einsatzbar ist.

Diese Aufgabe wird erfindungsgemäß durch die kennzeichnenden Merkmale der Ansprüche 1 und 2 gelöst.

Die mit der Erfindung erzielten Vorteile bestehen insbesondere darin, daß auf einfache Weise die Gewinnung oberwellenfreier periodischer Signale lediglich mit den herkömmlichen Mitteln bekannter Positionsmeßeinrichtungen ermöglicht wird, ohne daß zusätzliche Elemente wie Frequenzfilterblenden erforderlich sind und ohne daß besondere Anforderungen an die Genauigkeit der Teilung sowie an die Einhaltung eines konstanten Abstands zwischen den Teilungsflächen der Abtastplatte und des Teilungsträgers gestellt werden müssen. Es ergibt sich somit eine preiswerte, konventionell aufgebaute Meßeinrichtung; darüberhinaus wird die Lagerhaltung vereinfacht.

Vorteilhafte Weiterbildungen der Erfindung entnimmt man den Unteransprüchen.

Ausführungsbeispiele der Erfindung werden anhand der Zeichnung näher erläutert.

Es zeigen

Figure 1 eine Längenmeßeinrichtung im Querschnitt,

Figur 2 schematisch eine Abtasteinheit,

Figur 3 eine Abtastplatte mit Abtastfeldern,

Figur 4 eine weitere Abtastplatte mit Abtastfeldern,

Figur 5a, b eine Abtasteinheit mit einer Auswerteeinrichtung,

Figur 6a, b eine weitere Abtasteinheit mit einer Auswerteeinrichtung und

Figur 7 ein Funktionsdiagramm.

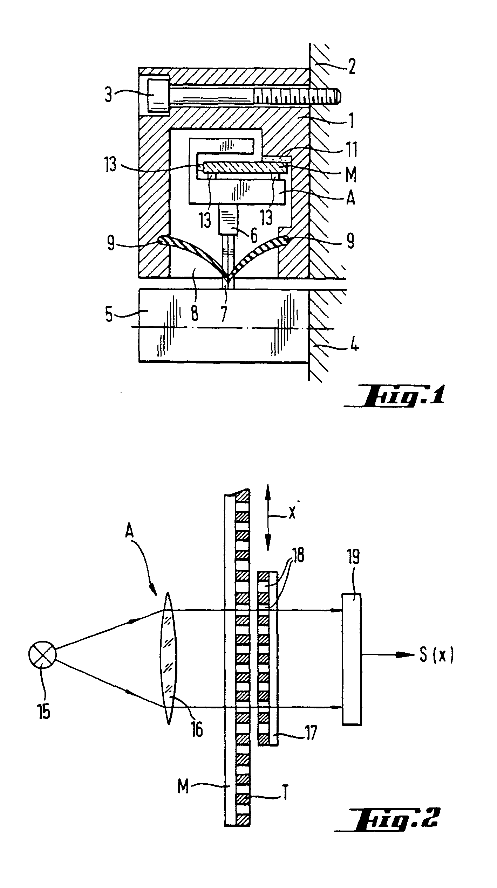

In Figur 1 ist eine lichtelektrische Längenmeßeinrichtung im Querschnitt dargestellt, deren Gehäuse 1 in Form eines Hohlprofils an einem Bett 2 einer nicht dargestellten Bearbeitungsmaschine mittels einer Schraubverbindung 3 befestigt ist. An einem Schlitten 4 der Bearbeitungsmaschine ist ein Montagefuß 5 mit einem Mitnehmer 6 in beliebiger Weise befestigt, der über eine schwertförmige Verjüngung 7 durch einen Schlitz 8 in das im übrigen vollkommen geschlossene Gehäuse 1 hineinragt, wobei im Schlitz 8 vorgesehene elastische Dichtlippen 9 ein Eindringen von Verunreinigungen in das Innere des Gehäuses 1 verhindern. An einer Innenfläche des Gehäuses 1 ist ein Maßstab M mittels einer elastischen Klebeschicht 11 angebracht, an dem sich eine Abtasteinheit A über Rollen 13 abstützt; die Relativbewegung des Schlittens 4 bezüglich des Betts 2 wird vom Mitnehmer 6 auf die Abtasteinheit A mittels einer nicht dargestellten Kupplung übertragen, die Fluchtungsabweichungen zwischen dem Schlitten 4 und dem Maßstab M ausgleichen kann.

Gemäß Figur 2 sind zur Abtastung der Teilung T des Maßstabs M in der Abtasteinheit A eine Lichtquelle 15, ein Kondensor 16, eine Abtastplatte 17 mit einer Teilung 18 und ein Photoelement 19 angeordnet. Die Teilung 18 der Abtastplatte 17 ist mit der Teilung T des Maßstabs M identisch. Der von der Lichtquelle 15 ausgehende Lichtstrom wird vom Kondensor 16 parallel gerichtet, durchsetzt die Teilungen T, 18 des Maßstabs M und der Abtastplatte 17 und fällt anschließend auf das Photoelement 19. Bei der Bewegung der Abtasteinheit A mit der Abtastplatte 17 in Meßrichtung x gegenüber dem feststehenden Maßstab M wird der Lichtstrom an den Teilungen T, 18 moduliert, so daß das Photoelement 19 ein periodisches elektrisches Analogsignal S (x) liefert, das ausgewertet, gezählt und in digitaler Form als Positionsmeßwert zur Anzeige gebracht werden kann.

Das vom Photoelement 19 gelieferte periodische Analogsignal S (x) ist im allgemeinen oberwellenbehaftet und kann als Funktion des Meßweges x durch eine Fourierreihe dargestellt werden:

$$S\ (x) = a_o + \sum_{k=1}^{N}\ (a_k \cos kx + b_k \sin kx).$$

Der laufende Summationsindex k ist die Ordnungszahl der Wellen oder Frequenzen (Grundwelle: $k=1$, 1. Oberwelle: $k=2$ etc.) und $a_k$, $b_k$ sind die Fourierkoeffizienten.

Zur Gewinnung oberwellenfreier periodischer Analogsignale $a_1$, $b_1$ wird zunächst die für die Teilung T des Maßstabs M typische maximale Bandbreite N (Anzahl der Frequenzen oder Wellen mit nicht verschwindenden Fourierkoeffizienten $a_k$, $b_k$) des periodischen Analogsignals S (x) ermittelt. Für diese Ermittlung der Bandbreite N wird die Teilung T beispielsweise mittels der Teilung 18 der Abtastplatte 17 und des Photoelements 19 nach Figur 2 unter Bezugnahme auf ein nicht gezeigtes Referenzmeßsystem über die gesamte Meßlänge abgetastet und das gewonnene periodische Analogsignal S (x) einer rechnerischen Fourieranalyse unterzogen. Die derart ermittelte Bandbreite N braucht bei einer Serie von mit der Teilung T identischen Teilungen nur einmal ermittelt werden. Diese Ermittlung der Bandbreite N kann der Fachmann auch durch Schätzung aufgrund seiner Erfahrung vornehmen.

Um aus dem gewonnenen periodischen Analogsignal S (x) mit der Bandbreite N

$$S\ (x) = a_o + \sum_{k=1}^{N}\ (a_k \cos kx + b_k \sin kx)$$

die Grundwelle mit den Fourierkoeffizienten $a_1$, $b_1$

$$a_1 = (1/N) \sum_{n=1}^{2N} S_n(x + n\pi/N) \cdot \cos\ (n\pi/N)$$

$$b_1 = (1/N) \sum_{n=1}^{2N} S_n(x + n\pi/N) \cdot \sin\ (n\pi/N)$$

herauszufiltern, kann eine erste Gruppe von 2N Signalen $S_n$ (x), die einen gegenseitigen Phasenversatz $\Delta a = 2\pi/2N = \pi/N$ aufweisen, erzeugt, mit einem Faktor $\cos\ (n\pi/N)$ multipliziert und aufsummiert werden; man erhält dann das Signal $\overline{a}_1(x)$

$$\overline{a}_1(x) = \sum_{n=1}^{2N} S_n(x + n\pi/N) \cos\ (n\pi/N).$$

3

Desgleichen kann eine zweite Gruppe von 2N Signalen $S_n(x)$, die einen gegenseitigen Phasenversatz von $\Delta\alpha=\pi/N$ aufweisen, erzeugt, mit einem Faktor sin $(n\pi/N)$ multipliziert und aufsummiert werden; man erhält dann das Signal $\overline{b}_1(x)$

$$\overline{b}_1(x)= \sum_{n=1}^{2N} S_n(x+n\pi/N)\sin(n\pi/N).$$

Diese Signale $\overline{a}_1(x)$ und $\overline{b}_1(x)$ entsprechen den Fourierkoeffizienten $a_1(x)$ und $b_1(x)$ bis auf einen Proportionalitätsfaktor 1/N:

$$a_1(x)=(1/N)\overline{a}_1(x)$$

$$b_1(x)=(1/N)\overline{b}_1(x).$$

Erfindungsgemäß wird zur Ermittlung des ersten Fourierkoeffizienten $a_1$ der Grundwelle des periodischen Analogsignals $S(x)$ mit der Bandbreite N die erste Gruppe von 2N jeweils um den Phasenwinkel $\Delta\alpha=\pi/N$ zueinander phasenverschobenen Signalen $S_n(x)$ mittels einer ersten Abtastgruppe $G_a$ von 2N entsprechend zueinander versetzten Teilfeldern $F_{a1n}$, $F_{a2n}$ und mittels zweier in Differenz geschalteter Photoelemente $P_{a1}$, $P_{a2}$ erzeugt, die den Teilfeldern $F_{a1n}$, $F_{a2n}$ zugeordnet sind. Die Multiplikation der Signale $S_n(x)$ mit dem Faktor cos $(n\pi/N)$ erfolgt durch die Bemessung der Breite der einzelnen Teilfelder $F_{a1n}$, $F_{a2n}$ in Meßrichtung x und die Summation der mit dem Faktor cos $(n\pi/N)$ versehenen Signale $S_n(x)$ durch die beiden Photoelemente $P_{a1}$, $P_{a2}$.

Zur Ermittlung des zweiten Fourierkoeffizienten $b_1$ der Grundwelle des periodischen Analogsignals $S(x)$ mit der Bandbreite N wird die zweite Gruppe von 2N jeweils um den Phasenwinkel $\Delta\alpha=\pi/N$ zueinander phasenverschoben Signalen $S_n(x)$ mittels einer zweiten Abtastgruppe $G_b$ von 2N zueinander entsprechend versetzten Teilfeldern $F_{b1n}$, $F_{b2n}$ und mittels zweier in Differenz geschalteter Photoelemente $P_{b1}$, $P_{b2}$ erzeugt, die den Teilfeldern $F_{b1n}$, $F_{b2n}$ zugeordnet sind. Die Multiplikation der Signale $S_n(x)$ mit dem Faktor sin $(n\pi/N)$ erfolgt durch die Bemessung der Breite der einzelnen Teilfelder $F_{b1n}$, $F_{b2n}$ in Meßrichtung x und die Summation der mit dem Faktor sin $(n\pi/N)$ versehenen Signale $S_n(x)$ durch die beiden Photoelemente $P_{b1}$, $P_{b2}$.

Die erste Abtastgruppe $G_a$ besteht aus einem ersten Abtastfeld $G_{a1}$ mit N Teilfeldern $F_{a1n}$ und aus einem zweiten Abtastfeld $G_{a2}$ mit N Teilfeldern $F_{a2n}$. Die zweite Abtastgruppe $G_b$ besteht ebenfall aus einem ersten Abtastfeld $G_{b1}$ mit N Teilfeldern $F_{b1n}$ und aus einem zweiten Abtastfeld $G_{b2}$ mit N Teilfeldern $F_{b2n}$.

Die erste Abtastgruppe $G_a$ ist gegen die zweite Abtastgruppe $G_b$ um ein Viertel der Teilungsperiode P der Teilung T des Maßstabs M in Meßrichtung x versetzt, während jeweils die ersten Abtastfelder $G_{a1}$, $G_{b1}$ gegen die zweiten Abtastfelder $G_{a2}$, $G_{b2}$ der beiden Abtastgruppen $G_a$, $G_b$ um die halbe Teilungsperiode P der Teilung T in Meßrichtung x versetzt sind; jeweils zwischen benachbarten Teilfeldern $F_{a1n}$, $F_{a2n}$, $F_{b1n}$, $F_{b2n}$ besteht ein konstanter Versatz von P/2N in Meßrichtung x. Die Breiten $B_{a1n}$, $B_{a2n}$ der Teilfelder $F_{a1n}$, $F_{a2n}$ der ersten Abtastgruppe $G_a$ sind in Meßrichtung x proportional zu einem Faktor Icos $(n\pi/N)$' und die Breiten $B_{b1n}$, $B_{b2n}$ der Teilfelder $F_{b1n}$, $F_{b2n}$ der zweiten Abtastgruppe $G_b$ in Meßrichtung x proportional zu einem Faktor Isin $(n\pi/N)$:.

Jedem Abtastfeld $G_{a1}$, $G_{a2}$, $G_{b1}$, $G_{b2}$ ist ein Abtastelement in Form der Photoelemente $P_{a1}$, $P_{a2}$, $P_{b1}$, $P_{b2}$ zugeordnet; die Abtastelemente $P_{a2}$, $P_{b2}$ der zweiten Abtastfelder $G_{a2}$, $G_{b2}$ sind jeweils in Differenz zu den Abtastelementen $P_{a1}$, $P_{b1}$ der ersten Abtastfelder $G_{a1}$, $G_{b1}$ geschaltet. Die in Differenz geschalteten Abtastelemente $P_{a1}$, $P_{a2}$, $P_{b1}$, $P_{b2}$ sind jeweils mit einer Auswerteeinrichtung W zur Bildung von Positionsmeßwerten verbunden.

Da der Kosinus des Phasenwinkels $\alpha$ über eine Teilungsperiode P der Teilung T des Maßstabs M zur einen Hälfte positiv und zur anderen Hälfte negativ ist, die Breiten $B_{a1n}$, $B_{a2n}$ der Teilfelder $F_{a1n}$, $F_{a2n}$ der ersten Abtastgruppe $G_a$ aber nur positiv sein können, werden dem ersten Abtastfeld $G_{a1}$ der ersten Abtastgruppe $G_a$ mit den N Teilfeldern $F_{a1n}$, die im Bereich zwischen den Phasenwinkeln $\alpha=-\pi/2$ und $\alpha=+\pi/2$, liegen, das erste Photoelement $P_{a1}$ und dem zweiten Abtastfeld $G_{a2}$ der ersten Abtastgruppe $G_a$ mit den N teilfeldern $F_{a2n}$, die im Bereich zwischen den Phasenwinkeln $\alpha=\pi/2$ und $\alpha=3\pi/2$ liegen, das zweiten Photoelement $P_{a2}$ zugeordnet, das zum ersten Photoelement $P_{a1}$ zur Summenbildung antiparallel (in Differenz) geschaltet ist. Da der Sinus des Phasenwinkels $\alpha$ über eine Teilungsperiode P der Teilung T ebenfalls zur einen Hälfte positiv und zur anderen Hälfte negativ ist, werden dem ersten Abtastfeld $G_{b1}$ der zweiten Abtastgruppe $G_b$ mit den N Teilfeldern $F_{b1n}$, die im Bereich zwischen den Phasenwinkeln $\alpha=0$ und $\alpha=\pi$ liegen, das erste Photoelement $P_{b1}$ und dem zweiten Abtastfeld $G_{b2}$ der zweiten Abtastgruppe $G_b$ mit den N Teilfeldern $F_{b2n}$, die im Bereich zwischen den Phasenwinkeln $\alpha=\pi$ und $\alpha=2\pi$ liegen, das zweite Photoelement $P_{b2}$ zugeordnet, das zum ersten Photoelement $P_{b1}$ zur Summenbildung ebenfalls antiparallel (in Differenz) geschaltet ist.

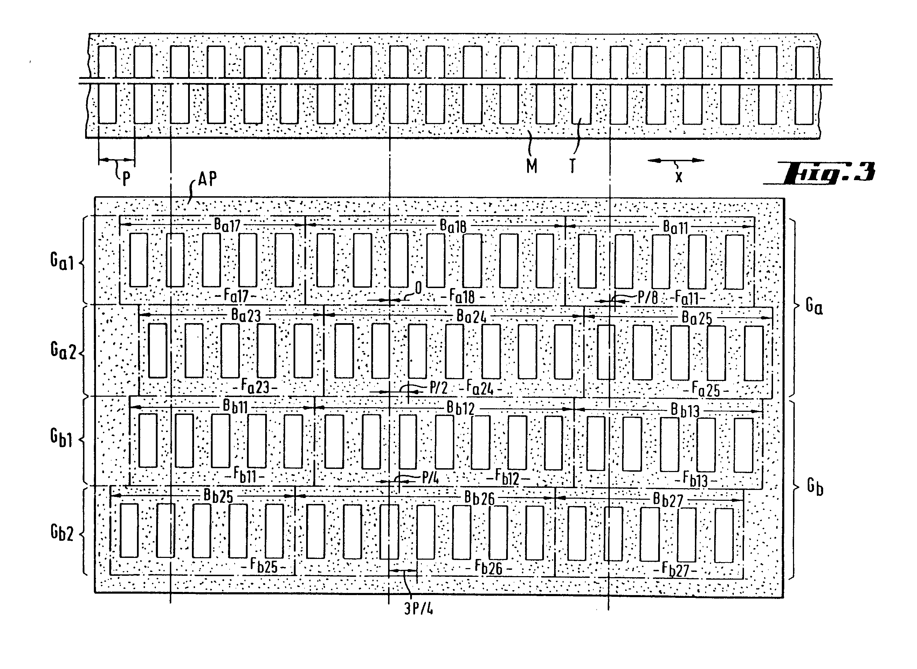

In Figur 3 ist der Maßstab M gemäß Figur 2 vergrößert dargestellt, dessen Teilung T mit der Teilungsperiode P von der Abtasteinheit A mittels einer Abtastplatte AP abgetastet wird. Das aus der Teilung T gewonnene periodische Analogsignal $S(x)$ habe die Bandbreite N=4. Erfindungsgemäß sind daher zur Gewinnung eines ersten oberwellenfreien periodischen Analogsignals in Form des ersten

Fourierkoeffizienten $a_1$ der Grundwelle des periodischen Analogsignals $S(x)$ eine erste Abtastgruppe $G_a$ mit $2N=8$ Teilfeldern $F_{a11}$, $F_{a12}$, $F_{a17}$, $F_{a18}$, $F_{a23}$—$F_{a26}$ und zur Gewinnung eines zweiten oberwellenfreien periodischen Analogsignals in Form des zweiten Fourierkoeffizienten $b_1$ der Grundwelle des periodischen Analogsignals $S(x)$ eine zweite Abtastgruppe $G_b$ mit 8 Teilfeldern $F_{b11}$—$F_{b14}$, $F_{b25}$—$F_{b28}$ auf der Abtastplatte AP angeordnet.

Jeweils zwischen benachbarten Teilfeldern $F_{a11}$, $F_{a12}$, $F_{a17}$, $F_{a18}$, $F_{a23}$—$F_{a26}$ der ersten Abtastgruppe $G_a$ und zwischen benachbarten Teilfeldern $F_{b11}$—$F_{b14}$, $F_{b25}$—$F_{b28}$ der zweiten Abtastgruppe $G_b$ besteht ein konstanter Versatz von $P/2N=P/8$ in Meßrichtung x. Zwischen dem ersten Abtastfeld $G_{a1}$ mit den Teilfeldern $F_{a11}$, $F_{a12}$, $F_{a17}$, $F_{a18}$, und dem zweiten Abtastfeld $G_{a2}$ mit den Teilfeldern $F_{a23}$—$F_{a26}$ der ersten Abtastgruppe $G_a$ sowie zwischen dem ersten Abtastfeld $G_{b1}$ mit den Teilfeldern $F_{b11}$—$F_{b14}$ und dem zweiten Abtastfeld $G_{b2}$ mit den Teilfeldern $F_{b25}$—$F_{b28}$ der zweiten Abtastgruppe $G_b$ besteht jeweils ein Versatz von $P/2$ in Meßrichng x; die zweite Abtastgruppe $G_b$ ist gegen die erste Abtastgruppe $G_a$ um $P/4$ in Meßrichtung x versetzt.

Die Breiten $B_{a1n}$, $B_{a2n}$ der einzelnen Teilfelder $F_{a1n}$, $F_{a2n}$ der ersten Abtastgruppe $G_a$ in Meßrichtung x sind proportional dem Betrag des Faktors $\cos(n\pi/N)$ des ersten Fourierkoeffizienten $a_1$ und die Breiten $B_{b1n}$, $B_{b2n}$ der einzelnen Teilfelder $F_{b1n}$, $F_{b2n}$ der zweiten Abtastgruppe $G_b$ proportional dem Betrag des Faktors $\sin(n\pi/N)$ des zweiten Fourierkoeffizienten $b_1$. Die Teilfelder $F_{a1n}$, $F_{a2n}$, $F_{b1n}$, $F_{b2n}$ mögen eine Grundbreite von 7P als Proportionalitätsfaktor aufweisen. Somit ergibt sich:

$$B_{a1n}=B_{a2n}=7P\cdot\cos(n\pi/4)$$

$$B_{b1n}=B_{b2n}=7P\cdot\sin(n\pi/4) .$$

Von der ersten Abtastgruppe $G_a$ dient das erste Abtastfeld $G_{a1}$ mit den Teilfeldern $F_{a11}$, $F_{a12}$, $F_{a17}$, $F_{a18}$ zur Abtastung der positiven Halbperiode der Kosinuswelle und das zweite Abtastfeld $G_{a2}$ mit den Teilfeldern $F_{a23}$—$F_{a26}$ zur Abtastung der negativen Halbperiode der Kosinuswelle des periodischen Analogsignals $S(x)$. Zur Abtastung der positiven Halbperiode der Teilungsperiode P der Teilung T werden die Teilfelder $F_{a11}$, $F_{a12}$, $F_{a17}$, $F_{a18}$ dem Phasenwinkel $\alpha$ und dem Summationsindex n des Fourierkoeffizienten $a_1$ wie folgt zugeordnet, wobei sich die zugehörigen Breiten $B_{a1n}$ der Teilfelder $F_{a11}$, $F_{a12}$, $F_{a17}$, $F_{a18}$ ergeben:

| $F_{a1n}$ | $\alpha$ | n | $\cos(n\pi/4)$ | $B_{a1n}=7P\cdot\cos(n\pi/4)$ |
|---|---|---|---|---|
| $F_{a17}$ | $7\pi/4$ | 7 | $\cos(7\pi/4)=0{,}71$ | 5P |
| $F_{a18}$ | 0 | 8 | $\cos 0=1$ | 7P |
| $F_{a11}$ | $\pi/4$ | 1 | $\cos(\pi/4)=0{,}71$ | 5P |
| $F_{12}$ | $\pi/2$ | 2 | $\cos(\pi/2)=0$ | 0 |

Zur Abtastung der negativen Halbperiode der Teilungsperiode P der Teilung T werden die Abtastfelder $F_{a23}$—$F_{a26}$ dem Phasenwinkel $\alpha$ und dem Summationsindex n des Fourierkoeffizienten $a_1$ wie folgt zugeordnet, wobei sich die zugehörigen Breiten $B_{a2n}$ der Abtastfelder $F_{a23}$—$F_{a26}$ ergeben:

| $F_{a2n}$ | $\alpha$ | n | $\cos(n\pi/4)$ | $B_{a2n}=7P\cdot\cos(n\pi/4)$ |
|---|---|---|---|---|
| $F_{a23}$ | $3\pi/4$ | 3 | $\cos(3\pi/4)=-0{,}71$ | 5P |
| $F_{a24}$ | $\pi$ | 4 | $\cos\pi=-1$ | 7P |
| $F_{a25}$ | $5\pi/4$ | 5 | $\cos(5\pi/4)=-0{,}71$ | 5P |
| $F_{a26}$ | $3\pi/2$ | 6 | $\cos(3\pi/2)=0$ | 0 |

Da die Teilfelder $F_{a12}$ und $F_{a26}$ die Breiten $B_{a12}=0$ und $B_{a26}=0$ aufweisen, sind sie in der Figur 3 nicht dargestellt.

Die Teilung T des Maßstabs M besteht aus lichtdurchlässigen Streifen und lichtundurchlässigen Streifen gleicher Breite, die in Meßrichtung x abwechselnd aufeinander folgen. Die Teilungsperiode P der Teilung T bestimmt sich durch die Breiten eines lichtdurchlässigen Streifens und eines lichtundurchlässigen Streifens in Meßrichtung x. Die Teilfelder $F_{a1n}$, $F_{a2n}$, $F_{b1n}$, $F_{b2n}$ der beiden Abtastgruppen $G_a$, $G_b$ weisen jeweils eine Teilung auf, die mit der Teilung T des Maßstabs M identisch ist. Die lichtundurchlässigen Streifen sind als dunkle Streifen dargestellt.

Wie aus den beiden obigen Tabellen ersichtlich, weist die Teilung des Teilfeldes $F_{a18}$ gegenüber der Teilung T des Maßstabs M keinen Versatz auf; die Teilungen der Teilfelder $F_{a11}$, $F_{a12}$, $F_{a17}$, $F_{a18}$, $F_{a23}$—$F_{a26}$

sind jeweils gegeneinander um den Betrag P/8 versetzt. Somit sind die Teilfelder $F_{a11}$, $F_{a12}$, $F_{a17}$, $F_{a18}$, $F_{a23}$—$F_{a26}$ gleichmäßig mit einem gegenseitigen Versatz von P/8 über die Periode P der Kosinuswelle des periodischen Analogsignals S(x) verteilt.

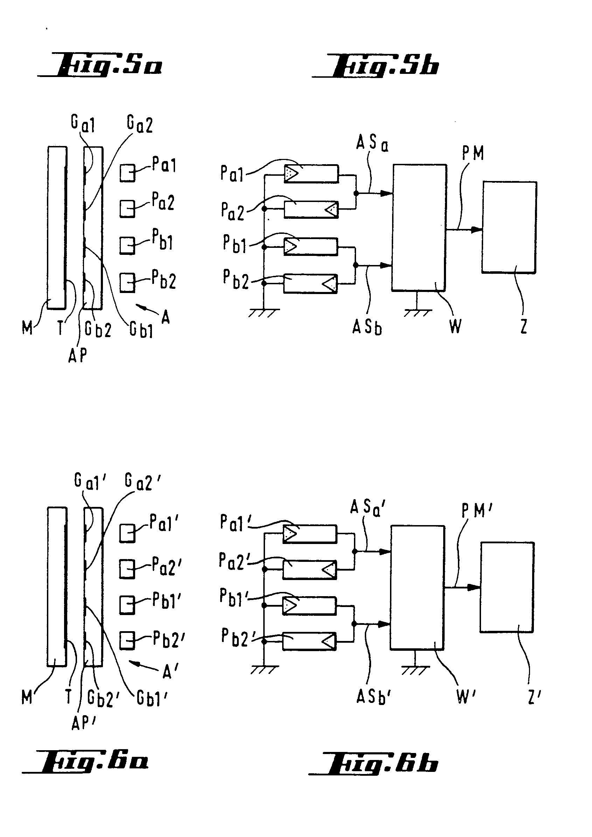

Gemäß Figur 5a ist dem ersten Abtastfeld $G_{a1}$ mit den Teilfeldern $F_{a11}$, $F_{a12}$, $F_{a17}$, $F_{a18}$ das erste Photoelement $P_{a1}$ und dem zweiten Abtastfeld $G_{a2}$ mit den Teilfeldern $F_{a23}$—$F_{a26}$ das zweite Photoelement $P_{a2}$ zugeordnet. Da sich für die Teilfelder $F_{a23}$—$F_{a26}$ negative Breiten $B_{a2n}$ ergeben, jedoch nur positive Breiten $B_{a2n}$ möglich sind, ist das zweite Photoelement $P_{a2}$ antiparallel (in Differenz) zum ersten Photoelement $P_{a1}$ geschaltet (Figur 5b). Das oberwellenfreie Ausgangssignal $AS_a$ der beiden antiparallel geschalteten Photoelement $P_{a1}$, $P_{a2}$ ist proportional zum ersten Fourierkoeffizienten $a_1$ des periodischen Analogsignals S(x) und wird einer Auswerteeinrichtung W zur Bildung von Positionsmeßwerten PM zugeleitet, die in einer nachgeschalteten Anzeigeeinheit Z in digitaler Form angezeigt werden können.

Von der zweiten Abtastgruppe $G_b$ dient das erste Abtastfeld $G_{b1}$ mit den Teilfeldern $F_{b11}$—$F_{b14}$ zur Abtastung der positiven Halbperiode der Sinuswelle und das zweite Abtastfeld $G_{b2}$ mit den Teilfeldern $F_{b25}$—$F_{b28}$ zur Abtastung der negativen Halbperiode der Sinuswelle des periodischen Analogsignals S(x).

Zur Abtastung der positiven Halbperiode der Teilungsperiode P der Teilung T werden die Teilfelder $F_{b11}$—$F_{b14}$ dem Phasenwinkel $\alpha$ und dem Summationsindex n des Fourierkoeffizienten $b_1$ wie folgt zugeordnet, wobei sich die zugehörigen Breiten $B_{b1n}$ der Teilfelder $F_{b11}$—$F_{b14}$ ergeben:

| $F_{b1n}$ | $\alpha$ | n | sin (nπ/4) | $B_{b1n}=7P\cdot\sin$ (nπ/4) |
|---|---|---|---|---|
| $F_{b11}$ | π/4 | 1 | sin (π/4)=0,71 | 5P |
| $F_{b12}$ | π/2 | 2 | sin (π/2)=1 | 7P |
| $F_{b13}$ | 3π/4 | 3 | sin (3π/2)=0,71 | 5P |
| $F_{b14}$ | π | 4 | sin π=0 | 0 |

Zur Abtastung der negativen Halbperiode der Teilungsperiode P der Teilung T werden die Abtastfelder $F_{b25}$—$F_{b28}$ dem Phasenwinkel $\alpha$ und dem Summationsindex n des Fourierkoeffizienten $b_1$ wie folgt zugeordnet, wobei sich die zugehörigen Breiten $B_{b2n}$ der Abtastfelder $F_{b25}$—$F_{b28}$ ergeben:

| $F_{b2n}$ | $\alpha$ | n | sin (nπ/4) | $B_{b2n}=7P\cdot\sin$ (nπ/4) |
|---|---|---|---|---|
| $F_{b25}$ | 5π/4 | 5 | sin (5π/4)=−0,71 | 5P |
| $F_{b26}$ | 3π/2 | 6 | sin (3π/2)=−1 | 7P |
| $F_{b27}$ | 7π/4 | 7 | sin (7π/4)=−0,71 | 5P |
| $F_{b28}$ | 0 | 8 | sin 0=0 | 0 |

Da die Abtastfelder $F_{b14}$ und $F_{b28}$ die Breiten $B_{b14}=0$ und $B_{b28}=0$ besitzen, sind die in der Figur 3 nicht dargestellt.

Wie aus den beiden obigen Tabellen ersichtlich, weist die Teilung des Teilfeldes $F_{b28}$ gegenüber der Teilung T des Maßstabs M keinen Versatz auf; die Teilungen der Teilfelder $F_{b11}$—$F_{b14}$, $F_{b25}$—$F_{b28}$ sind jeweils gegeneinander um den Betrag P/8 versetzt. Somit sind die Teilfelder $F_{b11}$—$F_{b14}$, $F_{b25}$—$F_{b28}$ gleichmäßig mit einem gegenseitigen Versatz von P/8 über die Periode P der Sinuswelle des periodischen Analogsignals S(x) verteilt.

Gemäß Figur 5a ist dem ersten Abtastfeld $G_{b1}$ mit den Teilfeldern $F_{b11}$—$F_{b14}$ das erste Photoelement $P_{b1}$ und dem zweiten Abtastfeld $G_{b2}$ mit den Teilfeldern $F_{b25}$—$F_{b28}$ das zweite Photoelement $P_{b2}$ zugeordnet. Da sich für die Teilfelder $F_{b25}$—$F_{b28}$ negative Breiten $B_{b2n}$ ergeben, jedoch nur positive Breiten $B_{b2n}$ möglich sind, ist das zweite Photoelement $P_{b2}$ antiparallel (in Differenz) zum ersten Photoelement $P_{b1}$ geschaltet (Figur 5b). Das oberwellenfreie Ausgangssignal $AS_b$ der beiden antiparallel geschalteten Photoelemente $P_{b1}$, $P_{b2}$ ist proportional zum zweiten Fourierkoeffizienten $b_1$ des periodischen Analogsignals S(x) und wird gleichfalls der Auswerteeinrichtung W zur Bildung von Positionsmeßwerten PM zugeleitet, die in der nachgeschalteten Anzeigeeinheit Z in digitaler Form angezeigt werden können.

Für eine möglichst vollständig oberwellenfreie Erzeugung der Grundwelle eines gewonnenen periodischen Analogsignals S(x) ist die Bandbreite N bei einer Schätzung so hoch wie möglich anzusetzen (z.B. N=12); dann gilt:

Breite eines Teilfeldes $F_n$:$B_n$ Versatz eines Teilfeldes $F_n$ zur Mitte eines Abtastfeldes G bezogen auf die Teilungsperiode $P=2\pi$:

$$\alpha=n\pi/N$$

Versatz zwischen zwei aufeinanderfolgenden Teilfeldern $F_n$, $F_{n+1}$:

$$\Delta\alpha=\pi/N$$

Es gilt:

$$B_n=B_o \cos \alpha=B_o \cos (n \cdot \Delta\alpha)$$

$B_o=$Grundbreite des Teilfeldes $F_o$

$$\sum_{n=-N/2}^{N/2} B_n=B_o \sum_{n=-N/2}^{N/2} \cos (n\Delta\alpha)\approx2B_oN/\pi=C$$

C=(Gesamtbreite des Abtastfeldes G

$$B_o=C\pi/2N=C\Delta\alpha/2$$

Abstand der Mitte des Teilfeldes $F_n$ von der Mitte des Abtastfeldes G:

$$r_n=\sum_{n=0}^{N} B_n=B_o \sum_{n=0}^{N} \cos (n\Delta\alpha)=(C\pi/2\pi) \sum_{n=0}^{N} \cos (n\Delta\alpha)$$

$$=(C\pi/2N) \cdot (N/\pi) \sin (n\Delta\alpha)$$

$$=(C/2) \sin (n\Delta\alpha)$$

$$r_n=(C/2) \sin \alpha$$

$$\sin \alpha=2r_n/C$$

$$\alpha=\text{arc sin } (2r_n/C)$$

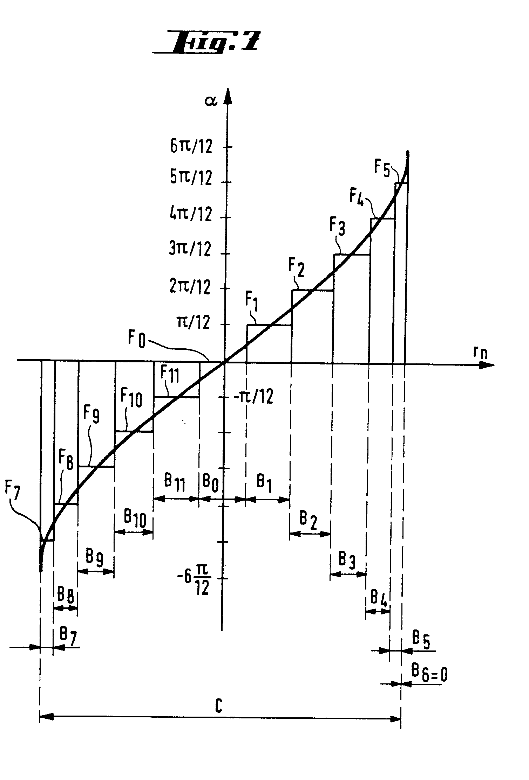

Diese Funktion $\alpha=f(r_n)$ ist für N=12 in Figur 7 dargestellt.

Erfindungsgemäß wird weiter vorgeschlagen, anstelle eines Abtastfeldes G mit N Teilfeldern $F_n$, die unterschiedliche Breiten $B_n$ und einen konstanten gegenseitigen Versatz $\Delta\alpha=\pi/N$ aufweisen, ein Abtastfeld G' mit M Teilfeldern $F'_m$ mit konstanter Breite B' vorzusehen, die gegeneinander jedoch einen variablen Versatz aufweisen, der so bemessen ist, daß die Mitten der Teilfelder $F_m'$ auf der gleichen Linie liegen, die durch die Funktion $\alpha=\text{arc sin } (2r_m/C)$ für $N\to\infty$ gebildet wird (m=0, 1, 2, ..., (M−1); M≧N; M=ungerade Zahl).

Für den Abstand $r_m$ der Mitte des m-ten Teilfeldes $F_m'$ mit der konstanten Breite $B'=k \cdot P$ (k=ganze Zahl) von der Mitte des Abtastfeldes G' gilt somit:

$$r_m=kmP+P\alpha/2\pi$$

$$r_m=P[km+(1/2\pi) \text{ arc sin } (2r_m/C)]$$

Mit $C\approx kP(M−1)$ und $\text{arc sin } (2r_m/C)\approx\text{arc sin } (2Pkm/C)$ ergibt sich:

$$r_m=P[km+(1/2\pi) \text{ arc sin } (2Pkm/kP(M−1))]$$

$$r_m=P[km+(1/2\pi) \text{ arc sin } (2m/(M−1))]$$

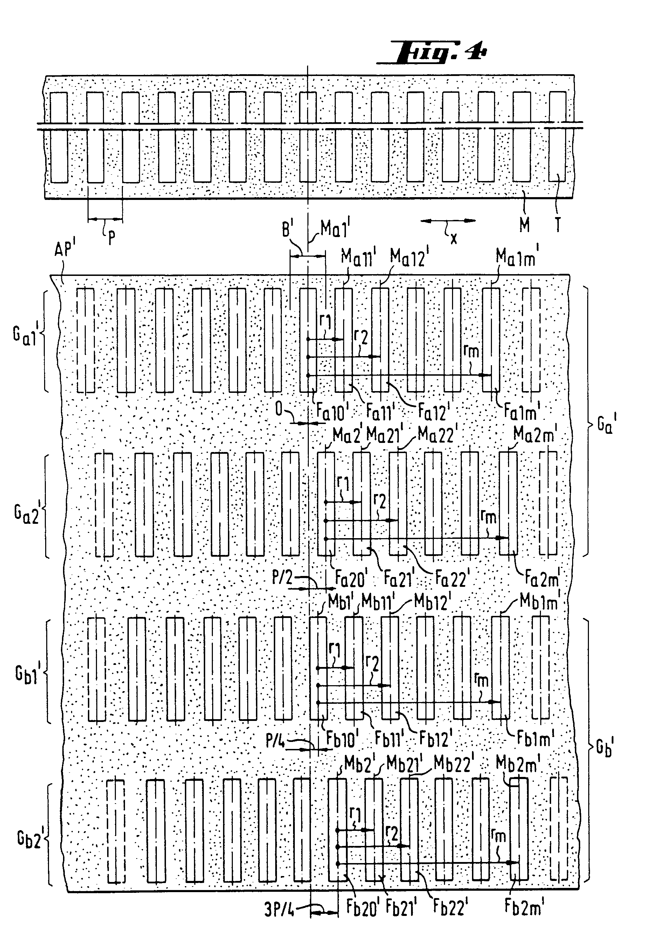

In Figur 4 ist ebenfalls der Maßstab M gemäß Figur 2 vergrößert dargestellt, dessen Teilung T mit der Teilungsperiode P mittels einer Abtastplatte AP' abgetastet wird. Das aus der Teilung T gewonnene periodische Analogsignal S(x) habe die Bandbreite N. Erfindungsgemäß sind daher zur Gewinnung eines ersten oberwellenfreien periodischen Analogsignals in Form des ersten Fouierkoeffizienten $a_1$ der Grundwelle des periodischen Analogsignals S(x) eine erste Abtastgruppe $G_a'$ mit einem ersten Abtastfeld $G_{a1}'$ und mit einem zweiten Abtastfeld $G_{a2}'$ und zur Gewinnung eines zweiten oberwellenfreien periodischen Analogsignals in Form des zweiten Fourierkoeffizienten $b_1$ der Grundwelle des periodischen Analogsignals S(x) eine zweite Abtastgruppe $G_b'$ mit einem ersten Abtastfeld $G_{b1}'$ und mit einem zweiten Abtastfeld $G_{b2}'$ auf der Abtastplatte AP' angeordnet.

Jedes Abtastfeld $G_{a1}'$, $G_{a2}'$, $G_{b1}' \cdot G_{b2}'$ der beiden Abtastgruppen $G_a'$, $G_b'$ besteht aus M Teilfeldern $F_{a1m}'$, $F_{a2m}'$, $F_{b1m}'$, $F_{b2m}'$ [m=0, 1, 2, ..., (M-1); M≧N). Die Teilfelder $F_{a1m}'$, $F_{a2m}'$, $F_{b1m}'$, $F_{b2m}'$ weisen jeweils eine mit der Teilung T des Maßstabs M identische Teilung und in Meßrichtung x eine konstante Breite B'=kP (k=ganze Zahl) auf. Gemäß Figur 4 beträgt die Breite B' der Teilfelder $F_{a1m}'$, $F_{a2m}'$, $F_{b1m}'$, $F_{b2m}'$ eine Teilungsperiode P der Teilung T des Maßstabs M (k=1).

Die Teilfeldmitten $M_{a1m}'$, $M_{a2m}'$, $M_{b1m}'$, $M_{b2m}'$ der Teilfelder $F_{a1m}'$, $F_{a2m}'$, $F_{b1m,}'$, $F_{b2m}'$ sind zur Abtastfeldmitte $M_{a1}'$, $M_{a2}'$, $M_{b1}'$, $M_{b2}'$ der zugehörigen Abtastfelder $G_{a1}'$ $G_{a2}'$, $G_{b1}'$, $G_{b2}'$ in Meßrichtung x um die Abstände $r_m = P[k \cdot m + (1/2\pi)$ arc sin $(2m/(M-1))]$ versetzt. Die Abtastfeldmitten $M_{a1}'$, $M_{b1}'$ der ersten Abtastfelder $G_{a1}'$, $G_{b1}'$ sind gegen die Abtastfeldmitten $M_{a2}'$, $M_{b2}'$ der zweiten Abtastfelder $G_{a2}'$, $G_{b2}'$ um die halbe Teilungsperiode P der Teilung T des Maßstabes M in Meßrichtung x versetzt; die erste Abtastgruppe $G_a'$ ist gegen die zweite Abtastgruppe $G_b'$ um ein Viertel der Teilungsperiode P der Teilung T des Maßstabs M in Meßrichtung x versetzt.

Dem ersten Abtastfeld $G_{a1}'$ der ersten Abtastgruppe $G_a'$ ist gemäß Figur 6a ein erstes Photoelement $P_{a1}'$ und dem zweiten Abtastfeld $G_{a2}'$ ein zweites Photoelement $P_{a2}'$ zugeordnet, die antiparallel (in Differenz) geschaltet sind. Das oberwellenfreie Ausgangssignal $AS_a'$ der beiden antiparallel geschalteten Photoelemente $P_{a1}'$, $P_{a2}'$ ist proportional zum ersten Fourierkoeffizienten $a_1$ der Grundwelle des periodischen Analogsignals S(x) und wird gemäß Figur 6b einer Auswerteeinrichtung W' zur Bildung von Positionsmeßwerten PM' zugeleitet, die in einer nachgeschalteten Anzeigeeinheit Z' angezeigt werden können.

Dem ersten Abtastfeld $G_{b1}'$ der zweiten Abtastgruppe $G_b'$ ist gemäß Figur 6a ein erstes Photoelement $P_{b1}'$ und dem zweiten Abtastfeld $G_{b2}'$ ein zweites Photoelement $P_{b2}'$ zugeordnet, die antiparallel (in Differenz) geschaltet sind. Das oberwellenfreie Ausgangssignal $AS_b'$ der beiden antiparallel geschalteten Photoelemente $P_{b1}'$, $P_{b2}'$ ist proportional zum zweiten Fourierkoeffizienten $b_1$ der Grundwelle des periodischen Analogsignals S(x) und wird gemäß Figur 6b ebenfalls der Auswerteeinrichtung W' zur Bildung von Positionsmeßwerten PM' zugeleitet, die in der nachgeschalteten Anzeigeeinheit Z' angezeigt werden können. Die Auswerteeinrichtungen W, W' können zur Bildung von Positionsmeßwerten PM, PM' einen Richtungsdiskriminator zur Erkennung der Meßrichtung x aufweisen, der an einen Vorwärts-/ Rückwärtszähler angeschlossen ist. Gleichfalls können die Auswerteeinrichtungen W, W' eine zusätzliche Interpolationseinrichtung zur Bildung von interpolierten Positionsmeßwerten innerhalb der Teilungsperiode P der Teilung T des Maßstabs M aufweisen.

Die Erfindung ist nicht auf lichtelektrische Positionsmeßeinrichtungen beschränkt, sondern auch bei magnetischen, induktiven und kapazitiven Positionsmeßeinrichtungen mit Erfolg einsetzbar.


**Patentansprüche**

1. Positionsmeßeinrichtung zur Messung der Relativlage zweier Objekte (2, 4), bei der die Teilung (T) eines Teilungsträgers (M) von einer Abtasteinheit (A) zur Gewinnung wenigstens eines periodischen Analogsignals (S) mit der Bandbreite von N Frequenten abtastbar ist, dadurch gekennzeichnet, daß zur Gewinnung wenigstens eines oberwellenfreien periodischen Analogsignals ($a_1$, $b_1$) wenigstens zwei in Meßrichtung z um die halbe Teilungsperiode P der Teilung (T) zueinander versetzte Abtastfelder ($G_{a1}$, $G_{a2}$, $G_{b1}$, $G_{b2}$) in der Abtasteinheit (A) vorgesehen sind, daß jedes Abtastfeld ($G_{a1}$, $G_{a2}$, $G_{b1}$, $G_{b2}$) aus N Teilfeldern ($F_{a1n}$, $F_{a2n}$, $F_{b1n}$, $F_{b2n}$) besteht, daß jeweils zwischen benachbarten Teilfeldern ($F_{a1n}$, $F_{a2n}$, $F_{b1n}$, $F_{b2n}$) ein konstanter Versatz P/2N in Meßrichtung x besteht, daß die Breiten $B_{a1n}$, $B_{a2n}$, $B_{b1n}$, $B_{b2n}$ der Teilfelder ($F_{a1n}$, $F_{a2n}$, $F_{b1n}$, $F_{b2n}$) in Meßrichtung X nach dem Betrag einer Sinusfunktion variiert sind, daß die mit Hilfe der Teilfelder ($F_{a1n}$, $F_{a2n}$, $F_{b1n}$, $F_{b2n}$) gewonnenen periodischen Analogsignale jedes Abtastfeldes (($G_{a1}$, $G_{a2}$, $G_{b1}$, $G_{b2}$) summiert werden können und daß aus den aufsummierten Analogsignalen jeweils zweier Abtastfelder ($G_{a1}$, $G_{a2}$, $G_{b1}$, $G_{b2}$) die Differenz gebildet werden kann.

2. Positionsmeßeinrichtung zur Messung der Relativlage zweier Objekte (2, 4), bei der die Teilung (T) eines Teilungsträgers (M) von einer Abtasteinheit (A') zur Gewinnung wenigstens eines periodischen Analogsignals (S) mit der Bandbreite von N Frequenzen abtastbar ist, dadurch gekennzeichnet, daß zur Gewinnung wenigstens eines oberwellenfreien periodischen Analogsignals ($a_1$, $b_1$) wenigstens zwei Abtastfelder ($G_{a1}'$, $G_{a2}'$, $G_{b1}'$, $G_{b2}'$) in der Abtasteinheit (A') vorgesehen sind, deren Abtastfeldmitten ($M_{a1}'$, $M_{a2}'$, $M_{b1}'$, $M_{b2}'$) in Meßrichtung x um die halbe Teilungsperiode P der Teilung (T) zueinander versetzt sind, daß jedes Abtastfeld ($G_{a1}'$, $G_{a2}'$, $G_{b1}'$, $G_{b2}'$) aus M Teilfeldern ($F_{a1m}'$, $F_{a2m}'$, $F_{b1m}'$, $F_{b2m}'$) (m=0, 1, 2, ..., (M−1); M≧N) mit jeweils wenigstens einer Teilungsperiode P besteht, daß der Versatz der Teilfeldmitten ($M_{a1m}'$, $M_{a2m}'$, $M_{b1m}'$, $M_{b2m}'$) der Teilfelder ($F_{a1m}'$, $F_{a2m}'$, $F_{b1m}'$, $F_{b2m}'$) zur Abtastfeldmitte ($M_{a1}'$, $M_{a2}'$, $M_{b1}'$, $M_{b2}'$) der Abtastfelder ($G_{a1}'$, $G_{a2}'$, $G_{b1}'$, $G_{b2}'$) in Meßrichtung x nach dem Betrag einer Arkussinusfunktion variiert ist, daß die Teilfelder ($F_{a1m}'$, $F_{a2m}'$, $F_{b1m}'$, $F_{b2m}'$) in Meßrichtung x eine konstante Breite B' aufweisen, daß die mit Hilfe der Teilfelder ($F_{a1m}'$, $F_{a2m}'$, $F_{b1m}'$, $F_{b2m}'$) gewonnenen periodischen Analogsignale jedes Abtastfeldes ($G_{a1}'$, $G_{a2}'$, $G_{b1}'$, $G_{b2}'$) summiert werden können und daß aus den aufsummierten Analogsignalen jeweils zweier Abtastfelder ($G_{a1}'$, $G_{a2}'$, $G_{b1}'$, $G_{b2}'$) die Differenz gebildet werden kann.

# EP 0 157 177 B1

3. Meßeinrichtung nach Anspruch 1, gekennzeichnet durch folgende Merkmale:

a) zur Gewinnung eines ersten oberwellenfreien periodischen Analogsignals ($a_1$) in Form des ersten Fourierkoeffizienten der Grundwelle des periodischen Analogsignals (S) mit der Bandbreite N sind in der Abtasteinheit (A) eine erste Abtastgruppe ($G_a$) mit einem ersten Abtastfeld ($G_{a1}$) und mit einem zweiten Abtastfeld ($G_{a2}$) und zur Gewinnung eines zweiten oberwellenfreien periodischen Analogsignals ($b_1$) in Form des zweiten Fourierkoeffizienten der Grundwelle des periodischen Analogsignals (S) mit der Brandbreite N eine zweite Abtastgruppe ($G_b$) mit einem ersten Abtastfeld ($G_{b1}$) und mit einem zweiten Abtastfeld ($G_{b2}$) vorgesehen;

b) die ersten Abtastfelder ($G_{a1}$, $G_{b1}$) sind gegen die zweiten Abtastfelder ($G_{a2}$, $G_{b2}$) um die halbe Teilungsperiode P der Teilung (T) des Teilungsträgers (M) in Meßrichtung X versetzt;

c) die erste Abtastgruppe ($G_a$) ist gegen die zweite Abtastgruppe ($G_b$) um ein Viertel der Teilungsperiode P der Teilung (T) des Teilungsträgers (M) in Meßrichtung X versetzt;

d) jedes Abtastfeld ($G_{a1}$, $G_{a2}$, $G_{b1}$, $G_{b2}$) der beiden Abtastgruppen ($G_a$, $G_b$) besteht aus N Teilfeldern ($F_{a1n}$, $F_{a2n}$, $F_{b1n}$, $F_{b2n}$);

e) jeweils zwischen benachbarten Teilfeldern ($F_{a1n}$, $F_{a2n}$, $F_{b1n}$, $F_{b2n}$) besteht ein konstanter Versatz von P/2N in Meßrichtung X;

f) die Breiten $B_{a1n}$, $B_{a2n}$ der Teilfelder ($F_{a1n}$, $F_{a2n}$) der ersten Abtastgruppe ($G_a$) sind in Meßrichtung x proportional zu einem Faktor ¡cos ($n\pi/N$) und die Breiten $B_{b1n}$, $B_{b2n}$ der Teilfeder ($F_{b1n}$, $F_{b2n}$) der zweiten Abtastgruppe ($G_b$) in Meßrichtung x proportional zu einem Faktor ¡sin ($n\pi/N$) ;

g) jedem Abtastfeld ($G_{a1}$, $G_{a2}$, $G_{b1}$, $G_{b2}$) ist ein Abtastelement ($P_{a1}$, $P_{a2}$, $P_{b1}$, $P_{b2}$) zugeordnet;

h) die Abtastelemente ($P_{a2}$, $P_{b2}$) der zweiten Abtastfelder ($G_{a2}$, $G_{b2}$) sind jeweils in Differenz zu den Abtastelementen ($P_{a1}$, $P_{b1}$) der ersten Abtastfelder ($G_{a1}$, $G_{b1}$) geschaltet und jeweils an eine Auswerteeinrichtung (W) zur Bildung von Positionsmeßwerten (PM) angeschlossen.

4. Meßeinrichtung nach Anspruch 2, gekennzeichnet durch folgende Merkmale:

a) zur Gewinnung eines ersten oberwellenfreien periodischen Analogsignals ($a_1$) in Form des ersten Fourierkoeffizienten der Grundwelle des periodischen Analogsignals (S) mit der Bandbreite N sind in der Abtasteinheit (A') eine erste Abtastgruppe ($G_a'$) mit einem ersten Abtastfeld ($G_{a1}'$) und mit einem zweiten Abtastfeld ($G_{a2}'$) und zur Gewinnung eines zweiten oberwellenfreien periodischen Analogsignals ($b_1$) in Form des zweiten Fourierkoeffizienten der Grundwelle des periodischen Analogsignals (S) mit der Bandbreite N eine zweite Abtastgruppe ($G_b'$) mit einem ersten Abtastfeld ($G_{b1}'$) und mit einem zweiten Abtastfeld ($G_{b2}'$) vorgesehen;

b) die Abtastfeldmitten ($M_{a1}'$, $M_{b1}'$) der ersten Abtastfelder ($G_{a1}'$, $G_{b1}'$) sind gegen die Abtastfeldmitten ($M_{a2}'$, $M_{b2}'$) der zweiten Abtastfelder ($G_{a2}'$, $G_{b2}'$) um die halbe Teilungsperiode P der Teilung (T) des Teilungsträgers (M) in Meßrichtung x versetzt;

c) die erste Abtastgruppe ($G_a'$) ist gegen die zweite Abtastgruppe ($G_b'$) um ein Viertel der Teilungsperiode P der Teilung (T) des Teilungsträgers (M) in Meßrichtung x versetzt;

d) jedes Abtastfeld ($G_{a1}'$, $G_{a2}'$, $G_{b1}'$, $G_{b2}'$) der beiden Abtastgruppen ($G_a'$, $G_b'$) besteht aus M Teilfeldern ($F_{a1m}'$, $F_{a2m}'$, $F_{b1m}'$, $F_{b2m}'$) ($m=0, 1, 2, \ldots, (M-1)$; $M \geq N$);

e) die Teilfeldmitten ($M_{a1m}'$, $M_{a2m}'$, $M_{b1m}'$, $M_{b2m}'$) der Teilfelder ($F_{a1m}'$, $F_{a2m}'$, $F_{b1m}'$, $F_{b2m}'$) weisen zur Abtastfeldmitte ($M_{a1}'$, $M_{a2}'$, $M_{b1}'$, $M_{b2}'$) der Abtastfelder ($G_{a1}'$, $G_{a2}'$, $G_{b1}'$, $G_{b2}'$) in Meßrichtung x die Abstände $r_m = P[k \cdot m + (1/2\pi) \text{ arc sin } (2m/(M-1))]$ auf ($k$=ganze Zahl);

f) die Teilfelder ($F_{a1m}'$, $F_{a2m}'$, $F_{b1m}'$, $F_{b2m}'$) weisen in Meßrichtung x eine konstante Breite $B' = k \cdot P$ auf;

g) jedem Abtastfeld ($G_{a1}'$, $G_{a2}'$, $G_{b1}'$, $G_{b2}'$) ist ein Abtastelement ($P_{a1}'$, $P_{a2}'$, $P_{b1}'$, $P_{b2}'$) zugeordnet;

h) die Abtastelemente ($P_{a2}'$, $P_{b2}'$) der zweiten Abtastfelder ($G_{a2}'$, $G_{b2}'$) sind jeweils in Differenz zu den Abtastelementen ($P_{a1}'$, $P_{b1}'$) der ersten Abtastfelder ($G_{a1}'$, $G_{b1}'$) geschaltet und jeweils an eine Auswerteeinrichtung (W') zur Bildung von Positionsmeßwerten (PM') angeschlossen.

5. Meßeinrichtung nach den Ansprüchen 2 und 4, dadurch gekennzeichnet, daß die Breite B' der Teilfelder ($F_{a1m}'$, $F_{a2m}'$, $F_{b1m}'$, $F_{b2m}'$) eine Teilungsperiode P der Teilung (T) des Teilungsträgers (M) beträgt ($k=1$).

6. Meßeinrichtung nach den Ansprüchen 3 und 4, dadurch gekennzeichnet, daß die Abtastelemente ($P_{a1}$, $P_{a2}$, $P_{b1}$, $P_{b2}$; $P_{a1}'$, $P_{a2}'$, $P_{b1}'$, $P_{b2}'$) durch lichtempfindliche Elemente gebildet sind.

7. Meßeinrichtung nach den Ansprüchen 3 und 4, dadurch gekennzeichnet, daß die Auswerteeinrichtung (W, W') zur Bildung von Positionsmeßwerten (PM, PM') einen Richtungsdiskriminator zur Diskriminierung der Meßrichtung mittels Phasenversatz aufweist, der an einen Vorwärts-/Rückwärtszähler angeschlossen ist.

8. Meßeinrichtung nach Anspruch 7, dadurch gekennzeichnet, daß die Auswerteeinrichtung (W, W') eine zusätzliche Interpolationseinrichtung zur Bildung von interpolierten Positionsmeßwerten innerhalb der Teilungsperiode P der Teilung (T) des Teilungsträgers (M) aufweist.

**Revendications**

1. Dispositif de mesure de position pour mesurer la position relative de deux objets (2, 4), dans lequel le graduation (T) d'un support de graduation (M) peut être explorée par une unité d'exploration (A) en vue de l'obtention d'au moins un signal analogique périodique (S) avec une largeur de bande de N fréquences, caractérisé par le fait qu'en vue de l'obtention d'au moins un signal analogique périodique ($a_1$, $b_1$), exempt

9

d'harmoniques, au moins deux champs d'exploration ($G_{a1}$, $G_{a2}$, $G_{b1}$, $G_{b2}$) décalés réciproquement dans la direction de mesure x de la moitié de la période P de la graduation (T) sont prévus dans l'unité d'exploration (A), que chaque champ d'exploration ($G_{a1}$, $G_{a2}$, $G_{b1}$, $G_{b2}$) se compose de N champs partiels ($F_{a1n}$, $F_{a2n}$, $F_{b1n}$, $F_{b2n}$), qu'entre chaque fois deux champs partiels voisins ($F_{a1n}$, $F_{a2n}$, $F_{b1n}$, $F_{b2n}$) existe un décalage constant P/2N dans la direction de mesure x, que les largeurs $B_{a1n}$, $B_{a2n}$, $B_{b1n}$, $B_{b2n}$ des champs partiels ($F_{a1n}$, $F_{a2n}$, $F_{b1n}$, $F_{b2n}$) varient dans la direction de mesure x selon la valeur d'une fonction sinus, que les signaux analogiques périodiques de chaque champ d'exploration ($G_{a1}$, $G_{a2}$, $G_{b1}$, $G_{b2}$), obtenus à l'aide des champs partiels ($F_{a1n}$, $F_{a2n}$, $F_{b1n}$, $F_{b2n}$) peuvent être soumis à une sommation et que la différence peut être formée à partir des signaux analogiques, soumis à une sommation, de chaque fois deux champs d'exploration ($G_{a1}$, $G_{a2}$, $G_{b1}$, $G_{b2}$).

2. Dispositif de mesure de position pour mesurer la position relative de deux objets (2, 4), dans lequel la graduation (T) d'un support de graduation (M) peut être explorée par une unité d'exploration (A') en vue de l'obtention d'au moins un signal analogique périodique (S), avec la largeur de bande de N fréquences, caractérisé par le fait qu'en vue de l'obtention d'au moins un signal analogique périodique ($a_1$, $b_1$), exempt d'harmoniques, au moins deux champs d'exploration ($G_{a1}'$, $G_{a2}'$, $G_{b1}'$, $G_{b2}'$) sont prévus dans l'unité d'exploration (A'), les milieux ($M_{a1}'$, $M_{a2}'$, $M_{b1}'$, $M_{b2}'$) de ces champs d'exploration étant décalés réciproquement dans la direction de mesure x de la moitié de la période P de la graduation (T), que chaque champ d'exploration ($G_{a1}'$, $G_{a2}'$, $G_{b1}'$, $G_{b2}'$) se compose de M champs partiels ($F_{a1m}'$, $F_{a2m}'$, $F_{b1m}'$, $F_{b2m}'$) (m=0, 1, 2, . . ., (M−1); M≥N) ayant chacun au moins une période de graduation P, que le décalage des milieux ($M_{a1m}'$, $M_{a2m}'$, $M_{b1m}'$, $M_{b2m}'$) des champs partiels ($F_{a1m}'$, $F_{a2m}'$, $F_{b1m}'$, $F_{b2m}'$) par rapport aux milieux ($M_{a1}'$, $M_{a2}'$, $M_{b1}'$, $M_{b2}'$) des champs d'exploration ($G_{a1}'$, $G_{a2}'$, $G_{b1}'$, $G_{b2}'$), dans la direction de mesure x, varie selon la valeur d'une fonction arc sinus, que les champs partiels ($F_{a1m}'$, $F_{a2m}'$, $F_{b1m}'$, $F_{b2m}'$) présentent dans la direction de mesure x une largeur constante B', que les signaux analogiques périodiques de chaque champ d'exploration ($G_{a1}'$, $G_{a2}'$, $G_{b1}'$, $G_{b2}'$), obtenus à l'aide des champs partiels ($F_{a1m}'$, $F_{a2m}'$, $F_{b1m}'$, $F_{b2m}'$) peuvent être soumis à une sommation et que la différence peut être formée à partir des signaux analogiques, soumis à une sommation, de chaque fois deux champs d'exploration ($G_{a1}'$, $G_{a2}'$, $G_{b1}'$, $G_{b2}'$).

3. Dispositif de mesure suivant la revendication 1, caractérisé par les caractéristiques suivantes:

a) en vue de l'obtention d'un premier signal analogique périodique ($a_1$), exempt d'harmoniques, sous la forme du premier coefficient de Fourier de l'onde fondamentale du signal analogique périodique (S) avec la largeur de bande N, il est prévu dans l'unité d'exploration (A) un premier groupe d'exploration ($G_a$) avec un premier champ d'exploration ($G_{a1}$) et avec un deuxième champ d'exploration ($G_{a2}$) et en vue de l'obtention d'un deuxième signal analogique périodique ($b_1$), exempt d'harmoniques, sous la forme du deuxième coefficient de Fourier de l'onde fondamentale du signal analogique périodique (S) avec la largeur de bande N, il est prévu dans l'unité d'exploration (A) un deuxième groupe d'exploration ($G_b$) avec un premier champ d'exploration ($G_{b1}$) et avec un deuxième chap d'exploration ($G_{b2}$);

b) les premiers champs d'exploration ($G_{a1}$, $G_{b1}$) sont décalés dans la direction de mesure x par rapport aux deuxièmes champs d'exploration ($G_{a2}$, $G_{b2}$) de la moitié de la période P de la graduation (T) du support de graduation (M);

(c) le premier groupe d'exploration ($G_a$) est décalé dans la direction de mesure x par rapport au deuxième groupe d'exploration ($G_b$) d'un quart de la période P de la graduation (T) du support de graduation (M);

d) chaque champ d'exploration ($G_{a1}$, $G_{a2}$, $G_{b1}$, $G_{b2}$) des deux groupes d'exploration ($G_a$, $G_b$) se compose de N champs partiels ($F_{a1n}$, $F_{a2n}$, $F_{b1n}$, $F_{b2n}$);

e) entre chaque fois deux champs partiels voisins ($F_{a1n}$, $F_{a2n}$, $F_{b1n}$, $F_{b2n}$) existe un décalage constant de P/2N dans la direction de mesure x;

f) les largeurs $B_{a1n}$, $B_{a2n}$ des champs partiels ($F_{a1n}$, $F_{a2n}$) du premier groupe d'exploration ($G_a$) sont, dans la direction de mesure x, proportionnelles à un facteur |cos (nπ/N)| et les largeurs $B_{b1n}$, $B_{b2n}$ des champs partiels ($F_{b1n}$, $F_{b2n}$) du deuxième groupe d'exploration ($G_b$) sont, dans la direction de mesure x, proportionelles à un facteur |sin (nπ/N)|;

g) un élément d'exploration ($P_{a1}$, $P_{a2}$, $P_{b1}$, $P_{b2}$) est associé à chaque champ d'exploration ($G_{a1}$, $G_{a2}$, $G_{b1}$, $G_{b2}$);

h) les éléments d'exploration ($P_{a2}$, $P_{b2}$) des deuxièmes champs d'exploration ($G_{a2}$, $G_{b2}$) sont montés chaque fois tête-bêche par rapport aux éléments d'exploration ($P_{a1}$, $P_{b1}$) des premiers champs d'exploration ($G_{a1}$, $G_{b1}$) et raccordés chaque fois à un dispositif d'exploitation (W) pour former des valeurs de mesure de position (PM).

4. Dispositif de mesure suivant la revendication 2, caractérisé par les caractéristiques suivantes:

a) en vue de l'obtention d'un premier signal analogique périodique ($a_1$), exempt d'harmoniques, sous la forme du premier coefficient de Fourier de l'onde fondamentale du signal analogique périodique (S) avec la largeur de bande N, il est prévu dans l'unité d'exploration (A') un premier groupe d'exploration ($G_a'$) avec un premier champ d'exploration ($G_{a1}'$) et avec un deuxième champ d'exploration ($G_{a2}'$) et en vue de l'obtention d'un deuxième signal analogique périodique ($b_1$), exempt d'harmoniques, sous la forme du deuxième coefficient de Fourier de l'onde fondamentale du signal analogique périodique (S) avec la largeur de bande N, il est prévu dans l'unité d'exploration (A') un deuxième groupe d'exploration ($G_b'$) avec un premier champ d'exploration ($G_{b1}'$) et avec un deuxième champ d'exploration ($G_{b2}'$);

b) les milieux ($M_{a1}'$, $M_{b1}'$) des premiers champs d'exploration ($G_{a1}'$, $G_1'$) sont décalés dans la direction de mesure x par rapport aux milieux ($M_{a2}'$, $M_{b2}'$) des deuxièmes champs d'exploration ($G_{a2}'$, $G_{b2}'$) de la moitié de la période P de la graduation (T) du support de graduation (M);

c) le premier groupe d'exploration ($G_a'$) est décalé dans la direction de mesure x par rapport au deuxième groupe d'exploration ($G_b'$) d'un quart de la période P de la graduation (T) du support de graduation (M);

d) chaque champ d'exploration ($G_{a1}'$, $G_{a2}'$, $G_{b1}'$, $G_{b2}'$) des deux groupes d'exploration ($G_a'$, $G_b'$) se compose de M champs partiels ($F_{a1m}'$, $F_{a2m}'$, $F_{b1m}'$, $F_{b2m}'$) (m=0, 1, 2, . . ., (M−1); M≥N);

e) les milieux ($M_{a1m}'$, $M_{a2m}'$, $M_{b1m}'$, $M_{b2m}'$) des chamnps partiels ($F_{a1m}'$, $F_{a2m}'$, $F_{b1m}'$, $F_{b2m}'$) présentent par rapport aux milieux ($M_{a1}'$, $M_{a2}'$, $M_{b1}'$, $M_{b2}'$) des champs d'exploration ($G_{a1}'$, $G_{a2}'$, $G_{b1}'$, $G_{b2}'$), dans la direction de mesure x, les distances $r_m = P [k \cdot m + (1/2\pi)$ arc sin $(2m/(M-1))]$ (k=nombre entier);

f) les champs partiels ($F_{a1m}'$, $F_{a2m}'$, $F_{b1m}'$, $F_{b2m}'$) présentent dans la direction de mesure x une largeur constante $B' = k \cdot P$;

g) à chaque champ d'exploration ($G_{a1}'$, $G_{a2}'$, $G_{b1}'$ $G_{b2}'$) est associé un élément d'exploration ($P_{a1}'$, $P_{a2}'$, $P_{b1}'$, $B_{b2}'$);

h) les éléments d'exploration ($P_{a2}'$, $P_{b2}'$) des deuxièmes champs d'exploration ($G_{a2}'$, $G_{b2}'$) sont montés chaque fois tête-bêche par rapport aux élément d'exploration ($P_{a1}'$, $P_{b1}'$) des premiers champs d'exploration ($G_{a1}'$, $G_{b1}'$) et raccordés chaque fois à un dispositif d'exploitation (W') pour former des valeurs de mesure de position (PM').

5. Dispositif de mesure suivant les revendications 2 et 4, caractérisé par le fait que la largeur B' des champs partiels ($F_{a1m}'$, $F_{a2m}'$, $F_{b1m}'$, $F_{b2m}'$) correspond à une période P de la graduation (T) du support de graduation (M) (k=1).

6. Dispositif de mesure suivant les revendications 3 et 4, caractérisé par le fait que les éléments d'exploration ($P_{a1}$, $P_{a2}$, $P_{b1}$, $P_{b2}$; $P_{a1}'$, $P_{a2}'$, $P_{b1}'$, $P_{b2}'$) sont constitués par des éléments photosensibles.

7. Dispositif de mesure suivant les revendications 3 et 4, caractérisé par le fait que le dispositif d'exploitation (W, W') pour la formation de valeurs de mesure de position (PM, PM') présente un discriminateur de sens pour discriminer le sens de mesure par déphasage, lequel est raccordé à un compteur-décompteur.

8. Dispositif de mesure suivant la revendication 7, caractérisé par le fait que le dispositif d'exploitation (W, W') présente en outre un dispositif d'interpolation pour former des valeurs de mesure de position interpolées à l'intérieur de la période P de la graduation (T) du support de graduation (M).

## Claims

1. A position measuring apparatus for measuring the relative position of two objects (2, 4) in which the scale (T) of a scale carrier (M) can be scanned by a scanning unit (A) for the production of at least one periodic analog signal (S) with a band width of N frequencies characterised in that for the production of at least one harmonics-free periodic analog signal ($a_1$, $b_1$), at least two scanning areas ($Ga_1$, $G_{a2}$, $G_{b1}$, $G_{b2}$) which are displaced relative to each other in the measuring direction x by half the scale period P of the scale (T) are provided in the scanning unit (A), that each scanning area ($G_{a1}$, $G_{a2}$, $G_{b1}$, $G_{b2}$) comprises N sub-areas ($F_{a1n}$, $F_{a2n}$, $F_{b1n}$, $F_{b2n}$), that there is a constant displacement P/2N in the measuring direction x between respectively adjacent sub-areas ($F_{a1n}$, $F_{a2n}$, $F_{b1n}$, $F_{b2n}$), that the widths $B_{a1n}$ $B_{a2n}$, $B_{b1n}$, $B_{b2n}$ of the sub-areas ($F_{a1n}$, $F_{a2n}$, $F_{b1n}$, $F_{b2n}$) in the measuring direction X are varied in accordance with the value of a sine function, that the periodic analog signals of each scanning area ($G_{a1}$, $G_{a2}$, $G_{b1}$, $G_{b2}$) which are produced by means of the sub-areas ($F_{a1n}$, $F_{a2n}$, $F_{b1n}$, $F_{b2n}$) can be summed and that the difference can be formed from the summed analog signals of two respective scanning areas ($G_{a1}$, $G_{a2}$, $G_{b1}$, $G_{b2}$).

2. A position measuring apparatus for measuring the relative position of two objects (2, 4) in which the scale (T) of a scale carrier (M) can be scanned by a scanning unit (A') for the production of at least one periodic analog signal (S) with a band width of N frequencies characterised in that for the production of at least one harmonics-free periodic analog signal ($A_1$, $b_1$), at least two scanning areas ($G_{a1}'$, $G_{a2}'$, $G_{b1}'$, $G_{b2}'$) are provided in the scanning unit (A'), the scanning area centres ($M_{a1}'$, $M_{a2}'$, $M_{b1}'$, $M_{b2}'$) of which are displaced relative to each other in the measuring direction x by half the scale period P of the scale (T), that each scanning area ($G_{a1}'$, $G_{a2}'$, $G_{b1}'$, $G_{b2}'$) comprises M sub-areas ($F_{a1m}'$, $F_{a2m}'$, $F_{b1m}'$, $F_{b2m}'$) (m=0, 1, 2 . . ., (M−1); M≥N) with at least one respective scale period P, that the displacement of the sub-area centres ($M_{a1m}'$, $M_{a2m}'$, $M_{b1m}'$, $M_{b2m}'$) of the sub-areas ($F_{a1m}'$, $F_{a2m}'$, $F_{b1m}'$, $F_{b2m}'$) relative to the scanning area centre ($M_{a1}'$, $M_{a2}'$, $M_{b1}'$, $M_{b2}'$) of the scanning areas ($G_{a1}'$, $G_{a2}'$, $G_{b1}'$, $G_{b2}'$) in the measuring direction x is varied in accordance with the value of an arc sine function, that the sub-areas ($F_{a1m}'$, $F_{a2m}'$, $F_{b1m}'$, $F_{b2m}'$) in the measuring direction x are of a constant width B', that the periodic analog signals of each scanning area ($G_{a1}'$, $G_{a2}'$, $G_{b1}'$, $G_{b2}'$), which are produced by means of the sub-areas ($F_{a1m}'$, $F_{a2m}'$, $F_{b1m}'$, $F_{b2m}'$) can be summed and that the difference can be formed from the summed analog signals of two respective scanning areas ($G_{a1}'$, $G_{a2}'$, $G_{b1}'$, $G_{b2}'$).

3. A measuring apparatus according to claim 1 characterised by the following features:

a) for the production of a first harmonics-free periodic analog signal ($a_1$) in the form of the first Fourier coefficient of the fundamental wave of the periodic analog signal (S) with a band width N, provided in the scanning unit (A) is a first scanning group ($G_a$) with a first scanning area ($G_{a1}$) and with a second scanning

area $(G_{a2})$ and for the production of a second harmonics-free periodic analog signal $(b_1)$ in the form of the second Fourier coefficient of the fundamental wave of the periodic analog signal (S) with a band width N, provided in the scanning unit (A) is a second scanning group $(G_b)$ with a first scanning area $(G_{b1})$ and with a second scanning area $(G_{b2})$;

b) the first scanning areas $(G_{a1}, G_{b1})$ are displaced relative to the second scanning areas $(G_{a2}, G_{b2})$ by half the scale period P of the scale (T) of the scale carrier (M) in the measuring direction X;

c) the first scanning group $(G_a)$ is displaced relative to the second scanning group $(G_b)$ by a quarter of the scale period P of the scale (T) of the scale carrier (M) in the measuring direction X;

d) each scanning area $(G_{a1}, G_{a2}, G_{b1}, G_{b2})$ of the two scanning groups $(G_a, G_b)$ comprises N sub-areas $(F_{a1n}, F_{a2n}, F_{b1n}, F_{b2n})$;

e) there is a constant displacement of P/2N in the measuring direction X between respectively adjacent sub-areas $(F_{a1n}, F_{a2n}, F_{b1n}, F_{b2n})$;

f) the widths $B_{a1n}, B_{a2n}$ of the sub-areas $(F_{a1n}, F_{a2nb})$ of the first scanning group $(G_a)$ are proportional to a factor $|\cos(n\pi/N)|$ in the measuring direction x and the widths $B_{b1n}, B_{b2n}$ of the sub-areas $(F_{b1n}, F_{b2n})$ of the second scanning group $(G_b)$ are proportional to a factor $|\sin(n\pi/N)|$ in the measuring direction x;

g) Associated with each scanning area $(G_{a1}, G_{a2}, G_{b1}, G_{b2})$ is a scanning element $(P_{a1}, P_{a2}, P_{b1}, P_{b2})$; and

h) the scanning elements $(P_{a2}, P_{b2})$ of the second scanning areas $(G_{a2}, G_{b2})$ are respectively connected in differential mode relative to the scanning elements $(P_{a1}, P_{b1})$ of the first scanning areas $(G_{a1}, G_{b1})$ and are respectively connected to an evaluation means (W) for the formation of position measurement values (PM).

4. A measuring apparatus according to claim 2 characterised by the following features:

a) for the production of a first harmonics-free periodic analog signal $(a_1)$ in the form of the first Fourier coefficient of the fundamental wave of the periodic analog signal (S) with a band width N, provided in the scanning unit (A') is a first scanning group (Ga') with a first scanning area $(G_{a1}')$ and with a second scanning area $(G_{a2}')$ and for the production of a second harmonics-free periodic analog signal $(b_1)$ in the form of the second Fourier coefficient of the fundamental wave of the periodic analog signal (S) with a band width N, provided in the scanning unit (A') is a second scanning group $(G_b')$ with a first scanning area $(G_{b1}')$ and with a second scanning area $(G_{b2}')$;

b) the scanning area centres $(M_{a1}', M_{b1}')$ of the first scanning areas $(G_{a1}', G_{b1}')$ are displaced relative to the scanning area centres $(M_{a2}', M_{b2}')$ of the second scanning areas $(G_{a2}', G_{b2}')$ by half the scale period P of the scale (T) of the scale carrier (M) in the measuring direction x;

c) the first scanning group $(G_a')$ is displaced relative to the second scanning group $(G_b')$ by a quarter of the scale period P of the scale (T) of the scale carrier (M) in the measuring direction x;

d) each scanning area $(G_{a1}', G_{a2}', G_{b1}', G_{b2}')$ of the two scanning groups $(G_a', G_b')$ comprises M sub-areas $(F_{a1m}', F_{a2m}', F_{b1m}', F_{b2m}')$ (m=0, 1, 2, . . ., (M−1); M≥N);

e) the sub-area centres $(M_{a1m}', M_{a2m}', M_{b1m}', M_{b2m}')$ of the sub-areas $(F_{a1m}', F_{a2m}', F_{b1m}', F_{b2m}')$, relative to the scanning area centre $(M_{a1}', M_{a2}', M_{b1}', M_{b2}')$ of the scanning areas $(G_{a1}', G_{a2}', G_{b1}', G_{b2}')$ in the measuring direction x, are at the spacings $rm=P[k \cdot m+(1/2\pi)$ arc sin $(2m/(M−1))]$ (k=an integer);

f) the sub-areas $(F_{a1m}', F_{a2m}', F_{b1m}', F_{b2m}')$ are of a constant width $B'=k \cdot P$ in the measuring direction x;

g) associated with each scanning area $(G_{a1}', G_{a2}', G_{b1}', G_{b2}')$ is a scanning element $(P_{a1}', P_{a2}', P_{b1}', P_{b2}')$; and

h) the scanning elements $(P_{a2}', P_{b2}')$ of the second scanning areas $(G_{a2}', G_{b2})$ are respectively connected in differential mode relative to the scanning elements $(P_{a1}', P_{b1}')$ of the first scanning areas $(G_{a1}', G_{b1}')$ and are relatively connected to an evaluation means (W') for the formation of position measurement values (PM').

5. A measuring apparatus according to claims 2 and 4 characterised in that the width B' of the sub-areas $(F_{a1m}', F_{a2m}', F_{b1m}', F_{b2m}')$ is a scale period P of the scale (T) of the scale carrier (M) (k=1).

6. A measuring apparatus according to claims 3 and 4 characterised in that the scanning elements $(P_{a1}, P_{a2}, P_{b1}, P_{b2}; P_{a1}', P_{a2}', P_{b1}', P_{b2}')$ are formed by photosensitive elements.

7. A measuring apparatus according to claims 3 and 4 characterised in that the evaluation means (W, W') for the formation of position measurement values (PM, PM') has a direction discriminator for discriminating the measuring direction by means of phase shift, which is connected to an up-down counter.

8. A measuring apparatus according to claim 7 characterised in that the evaluation means (W, W') has an additional interpolation means for forming interpolated position measurement values within the scale period P of the scale (T) of the scale carrier (M).

EP 0 157 177 B1

_Fig.1_

_Fig.2_

1

Fig.3

_Fig. 4_

3

Fig.5a

Fig.5b

Fig.6a

Fig.6b

Fig.7